# EUROPEAN PATENT APPLICATION

(11) **EP 1 757 919 A1**
(43) Date of publication of application: **28.02.2007**
(21) Application number: 05745859.8
(22) Date of filing: 01.06.2005
(51) Int. Cl.: G01N 13/10, G01N 13/12, G01N 13/16, G12B 21/02

(54) **PROBE HEAD MANUFACTURING METHOD**

(30) Priority: 04.06.2004 JP 2004167170
(71) Applicant: Pioneer Corporation, Tokyo 153-8654 (JP); ESASHI, Masayoshi, Sendai-shi, Miyagi 982-0807 (JP)
(72) Inventor: TAKAHASHI, Hirokazu;, jimi 6-chome, Tsurugashima-shi, Saitama (JP); ONO, Takahito;, shi, Miyagi 9820831; (JP)
(74) Representative: Skuhra, Udo
(86) International application number: PCT/JP2005/010067
(87) International publication number: WO 2005/119204

(57) **Abstract**

A beam (32) of a probe head (30) having a uniform thickness is formed by using a silicon layer (64) of a SOI substrate. The beam of the probe head is formed by growing a boron-doped diamond and non-doped diamond on a processing substrate, respectively.

## Description

### Technical Field

The present invention relates to a manufacturing method of a probe head used for a scanning probe microscope apparatus or a scanning probe information recording / reproducing apparatus or the like, for example.

### Background Art

A scanning probe microscope (SPM) is known as an apparatus capable of measuring the shape, property, or the like of the surface of a sample, in nano scale. In particular, there are widely spread a scanning tunneling microscope (STM) for scanning the surface of a sample with a probe and performing measurements by using a tunneling current which flows between the probe and the sample, and also an atomic force microscope (AFM) for scanning the surface of a sample with a probe and performing measurements by using an atomic force which is applied between the probe and the sample.

Recently, as a kind of the scanning probe microscope, there has been developed a scanning nonlinear dielectric microscope (SNDM) for reading the nonlinear constant of a ferroelectric sample to thereby measure the polarization state or crystalline state of the ferroelectric sample. According to the SNDM, the polarization state or the like of the ferroelectric sample can be measured, purely electrically, with nanoscale high resolution (refer to a patent document 1, etc.).

Moreover, a research in which the SNDM technology is applied to realize information recording has been started. Hereinafter, the information recording in which the SNDM technology is applied (referred to as "SNDM information recording") will be outlined. Firstly, an electric field which exceeds the coercive field of a ferroelectric substance is locally applied to the ferroelectric substance through the probe, to thereby record digital information into the ferroelectric substance as a polarization direction. The digital information, recorded in the ferroelectric substance as the polarization direction, is maintained even after the application of the electric field is stopped, because of the characteristic of spontaneous polarization of the ferroelectric substance. Then, using the SNDM technology, the polarization direction of the ferroelectric substance is detected, and the digital information recorded as the polarization direction is read.

According to the SNDM information recording, theoretically, it is possible to improve its information recording density up to the crystal lattice unit of the ferroelectric substance. Thus, it is expected to realize super high-density information recording, which exceeds the limit of the recording density (diffraction limit) in optical information recording, such as a DVD and a Blu-ray Disc, and the limit of the recording density (superparamagnetic limit) in magnetic information recording, such as a hard disk drive.

With regard to the probe head used in the SNDM and the SNDM information recording, various types are suggested, such as (1) a probe head which is provided with a tungsten needle extending toward the sample surface in a direction perpendicular to the sample surface, with the base end portion of the tungsten needle fixed to a head substrate, and (2) a probe head which is provided with a beam (brace) extending in a direction almost horizontal to the sample surface, with the base end portion of the beam fixed with a head substrate, and with the tip portion of the beam provided with a tip extending toward the sample surface in a direction perpendicular to the sample surface. Hereinafter, the latter type of probe head is referred to as a "cantilever type probe head" .
Patent document 1: Japanese Patent Application Laid Open No. 2003-085969

### Disclosure of Invention

### Subject to be Solved by the Invention

By the way, in the SNDM and the SNDM information recording, the scanning is performed while the tip end of the cantilever type probe head is in contact with the surface of the ferroelectric substance. Thus, if there is slightly unevenness (concavity and convexity) on the surface of the ferroelectric substance, the tip end passes on the unevenness during the scanning, so that the beam vibrates (or shakes). If the beam vibrates, the tip end floats by little and little from the surface of the ferroelectric substance, which incompletes the scanning and which likely causes measurement failure or information reading failure or the like. Particularly in the SNDM information recording, it is necessary to increase a scanning speed in view of a request to improve an information reading speed. If the tip end passes on the unevenness of the ferroelectric substance surface during the high-speed scanning, large vibration occurs in the cantilever and it takes a time to converge the vibration, which likely causes the information reading failure to be a serious problem.

Considering a way of solving such a problem, firstly, if the frequency of the vibration of the beam is known in advance, it is possible to take measures to prevent the information reading failure, such as restricting the upper limit of the scanning speed in view of a relationship between the vibration of the beam and the occurrence of the information reading failure. In order to do so, it is necessary to reduce variation in each probe with regard to the frequency of the vibration of the beam. Moreover, in the case of a multi-probe, it is necessary to reduce the variation among a plurality of probes. In order to do so, it is necessary to ensure uniformity in beam thickness. However, the beam thickness is extremely thin, such as several nanometers to several micrometers, and moreover, if the beam thickness varies by several nanometers, the frequency of the vibration of the beam also varies. Thus, it is not easy to uniform the beam thickness to thereby uniform the frequency of the vibration of the beam. Specifically, in the mass production of the probe head, it is not easy to uniform the beam thickness in all the probe heads. Moreover, in a multi-probe type probe head, several tens to several hundreds of the cantilever type probes are arranged, so that it is difficult to uniform the beam thickness in all the probes.

On the other hand, in the SNDM and the SNDM information recording, in the scanning, the tip end of the cantilever type probe head is contacted with the surface of the ferroelectric substance. Thus, it is desirable to provide the probe head with a distortion detection circuit, to thereby detect whether or not the tip end contacts the ferroelectric substance surface. In this case, if a piezo-resistive element for distortion detection is provided for one portion of the beam of the probe head, it is possible to detect the deflection of the beam, caused by the tip end contacting the ferroelectric substance surface, and by this, it is possible to detect whether or not the tip end contacts the ferroelectric substance surface. However, if the piezo-resistive element for distortion detection is provided for one portion of the beam of the probe head, the area of the cantilever becomes large. This makes it more difficult to ensure uniformity in beam thickness.

In order to solve the above-exemplified problems, it is therefore an object of the present invention to provide a manufacturing method of a probe head, which can uniform the frequency of the vibration of the cantilever or increase the uniformity of the frequency of the vibration of the cantilever and which can prevent the measurement failure or information reading failure.

### Means for Solving the Subject

The above object of the present invention can be achieved by a first manufacturing method of a probe head provided with a diamond tip, the manufacturing method provided with: a mold hole forming process of forming a mold hole for forming the diamond tip, toward a bottom surface side of a base layer from a processing surface, in one portion of a SOI (Silicon On Insulator) substrate in which an insulating layer is formed on the base layer, a silicon layer is formed on the insulating layer, and a surface of the silicon layer is the processing surface; a tip forming process of growing diamond in the mold hole, with impurities mixed therein, to thereby form the diamond tip; a signal route forming process of forming a pattern made of a conductive material on the processing surface, to thereby form a signal route which allows input / output of an electrical signal with respect to the diamond tip; a connecting process of connecting a head substrate to the processing surface; and a removing process of etching the base layer from the bottom surface side, to thereby remove the base layer and the insulating layer.

The above object of the present invention can be also achieved by a second manufacturing method of a probe head provided with a diamond tip and a distortion detection circuit, the manufacturing method provided with: a mold hole forming process of forming a mold hole for forming the diamond tip, toward a bottom surface side of a base layer from a processing surface, in one portion of a SOI (Silicon On Insulator) substrate in which an insulating layer is formed on the base layer, a silicon layer is formed on the insulating layer, and a surface of the silicon layer is the processing surface; a tip forming process of growing diamond in the mold hole, with impurities mixed therein, to thereby form the diamond tip; a circuit forming process of implanting impurities into a circuit formation area, which is disposed away from the mold hole, in the silicon layer, to thereby form a low resistant layer in the circuit formation area, to thereby form the distortion detection circuit; a signal route forming process of forming a pattern made of a conductive material on the processing surface, to thereby form a signal route which allows input / output of an electrical signal with respect to the diamond tip and a signal route which allows input / output of another electrical signal with respect to the distortion detection circuit; a connecting process of connecting a head substrate to the processing surface; and a removing process of etching the base layer from the bottom surface side, to thereby remove the base layer and the insulating layer.

The above object of the present invention can be also achieved by a third manufacturing method of a probe head provided with a diamond tip, the manufacturing method provided with: a mold hole forming process of forming a mold hole for forming the diamond tip, toward a bottom surface side of a base layer from a processing surface, in one portion of a SOI (Silicon On Insulator) substrate in which an insulating layer is formed on the base layer, a silicon layer is formed on the insulating layer, and a surface of the silicon layer is the processing surface; a tip forming process of growing diamond in the mold hole, to thereby form the diamond tip; a signal route forming process of forming a signal route of a signal which is inputted to / outputted from the diamond tip, on the processing surface; a connecting process of connecting a head substrate to the processing surface; and a removing process of etching the base layer from the bottom surface side, to thereby remove the base layer and the insulating layer.

The above object of the present invention can be also achieved by a fourth manufacturing method of a probe head provided with a diamond tip and a distortion detection circuit, the manufacturing method provided with: a mold hole forming process of forming a mold hole for forming the diamond tip, toward a bottom surface side of a base layer from a processing surface, in one portion of a SOI (Silicon On Insulator) substrate in which an insulating layer is formed on the base layer, a silicon layer is formed on the insulating layer, and a surface of the silicon layer is the processing surface; a tip forming process of growing diamond in the mold hole, to thereby form the diamond tip; a circuit forming process of implanting impurities into a circuit formation area, which is disposed away from the mold hole, in the silicon layer, to thereby form a low resistant layer in the circuit formation area, to thereby form the distortion detection circuit; a signal route forming process of forming a signal route of a signal which is inputted to / outputted from the diamond tip and a signal route which allows input / output of another electrical signal with respect to the distortion detection circuit; a connecting process of connecting a head substrate to the processing surface; and a removing process of etching the base layer from the bottom surface side, to thereby remove the base layer and the insulating layer.

### Brief Description of Drawings

[FIG. 1] FIG. 1 is an explanatory diagram showing the basic structure of a probe head.
[FIG. 2] FIG. 2 is a perspective view showing the probe head manufactured by an embodiment of the manufacturing method of the present invention.
[FIG. 3] FIG. 3 is a plan view showing the probe head in FIG. 2.
[FIG. 4] FIG. 4 is a cross sectional view showing the probe head in FIG. 2.
[FIG. 5] FIG. 5 is a cross sectional view showing a SOI substrate used in the embodiment of the manufacturing method of the present invention.
[FIG. 6] FIG. 6 is a cross sectional view showing a mold hold forming process in the embodiment of the manufacturing method of the present invention.
[FIG. 7] FIG. 7 is a cross sectional view showing the mold hold forming process following FIG. 6.
[FIG. 8] FIG. 8 is a cross sectional view showing the mold hold forming process following FIG. 7.
[FIG. 9] FIG. 9 is a cross sectional view showing the mold hold forming process following FIG. 8.
[FIG. 10] FIG. 10 is a cross sectional view showing a tip forming process in the embodiment of the manufacturing method of the present invention.
[FIG. 11] FIG. 11 is a cross sectional view showing a circuit forming process in the embodiment of the manufacturing method of the present invention.
[FIG. 12] FIG. 12 is a cross sectional view showing the circuit forming process following FIG. 11.
[FIG. 13] FIG. 13 is a cross sectional view showing the circuit forming process following FIG. 12.
[FIG. 14] FIG. 14 is a cross sectional view showing the circuit forming process following FIG. 13.
[FIG. 15] FIG. 15 is a cross sectional view showing a signal route forming process in the embodiment of the manufacturing method of the present invention.
[FIG. 16] FIG. 16 is a cross sectional view showing a connecting process in the embodiment of the manufacturing method of the present invention.
[FIG. 17] FIG. 17 is a cross sectional view showing a removing process in the embodiment of the manufacturing method of the present invention.
[FIG. 18] FIG. 18 is a cross sectional view showing the removing process following FIG. 17.

### Description of Reference Codes

- 30: probe head
- 31: head substrate
- 33, 77: tip support portion
- 34, 71: diamond tip
- 36, 78: distortion detection circuit
- 37, 79: insulating wall portion
- 61: SOI substrate
- 62: base layer
- 63: insulating layer
- 64: silicon layer
- 74: low resistance layer (boron-doped layer)

### Best Mode for Carrying Out the Invention

Hereinafter, the best mode for carrying out the invention will be explained, with reference to the drawings.

### (Basic Structure of Probe Head)

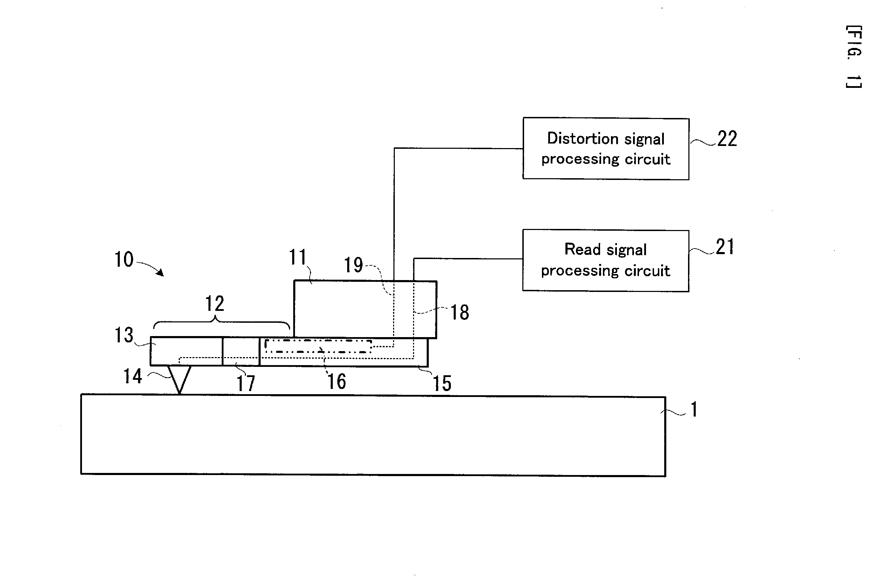

FIG. 1 shows the basic structure of a probe head. In FIG. 1, a probe head 10 is the cantilever type probe head used in the SNDM and the SNDM information recording. The probe head 10 is provided with: a head substrate 11; and a beam (cantilever) 12 extending from the head substrate 11.

On the tip end side of the beam 12, a tip support portion 13 is formed. The tip support portion 13 supports a diamond tip 14 which is sharp. On the base end side of the beam 12, a circuit portion 15 is formed. In the circuit portion 15, a distortion detection circuit 16 is formed. In the beam 12, an insulating wall portion 17 is formed between the tip support portion 13 and the circuit portion 15.

The tip support portion 13 and the diamond tip 14 are both low resistant and substantially electric conductors. Moreover, the distortion detection circuit 16 is a Wheatstone bridge circuit, for example, and is provided with a resistive element or the like constituting the Wheatstone bridge circuit. The insulating wall portion 17 is high resistant and is substantially an insulator. The insulating wall portion 17 has a function of electrically separating the diamond tip 14 and the distortion detection circuit 16.

The diamond tip 14 is connected to a read signal processing circuit 21 through a signal route 18. The distortion detection circuit 16 is connected to a distortion signal processing circuit 22 through a signal route 19. Incidentally, the read signal processing circuit 21 and the distortion signal processing circuit 22 are disposed in the exterior of the probe head 10.

In measuring the polarization state of a ferroelectric sample, or in reading information recorded in a ferroelectric recording medium, scanning is performed while the tip of the diamond tip 14 is in contact with the surface of a ferroelectric substance 1, which is the sample or the recording medium. Whether or not the tip of the diamond tip 14 is in contact with the surface of the ferroelectric substance 1 can be detected by detecting the slight deflection of the beam 12, by using the distortion detection circuit 16.

### (Embodiment of Probe Head)

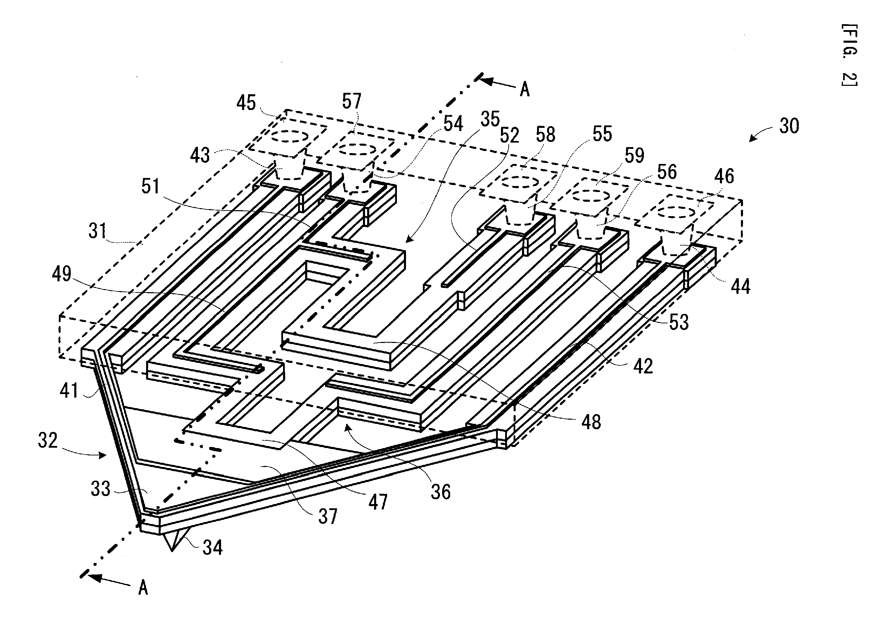

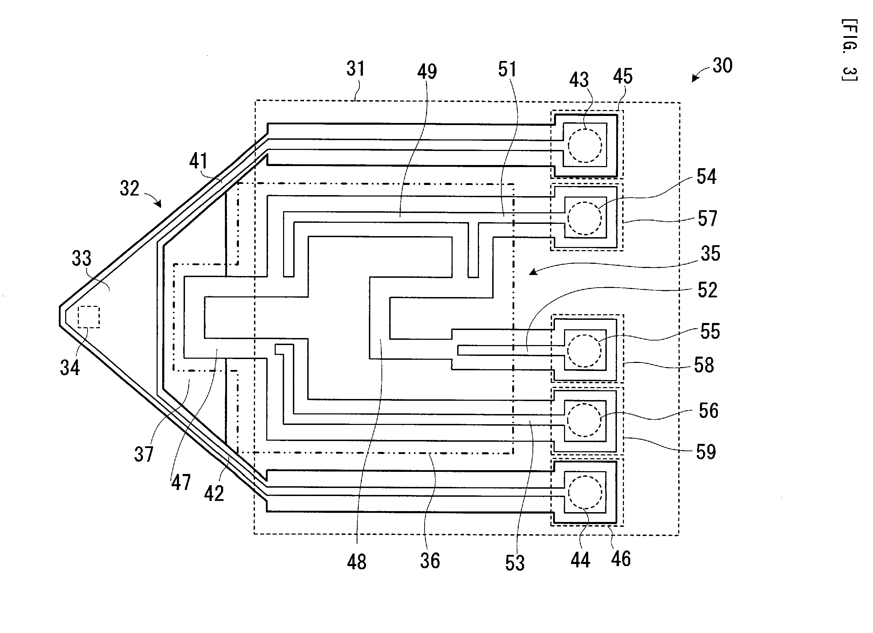

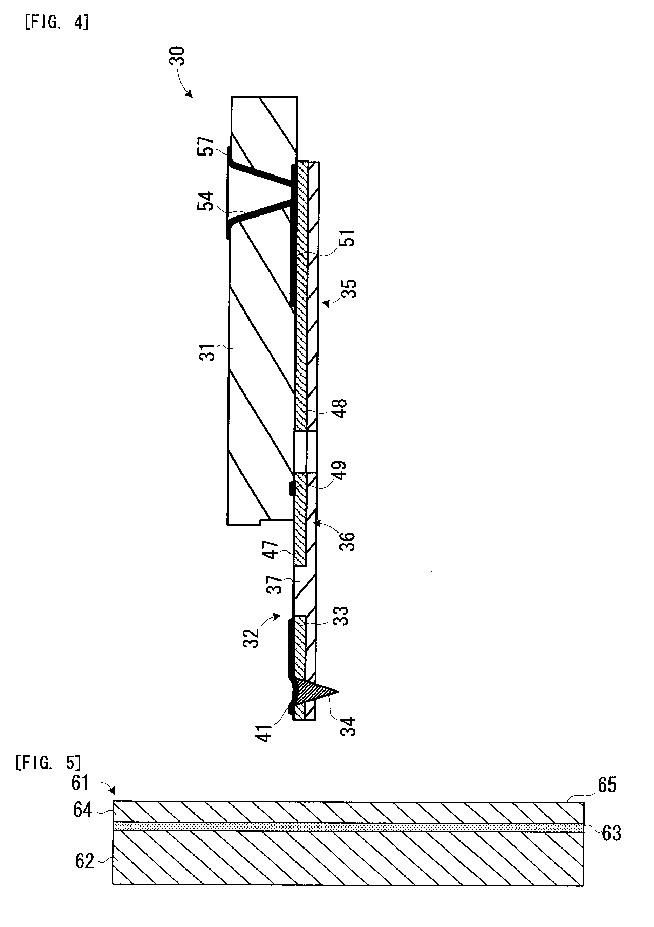

FIG. 2, FIG. 3, and FIG. 4 are a perspective view, a plan view, and a cross sectional view showing an embodiment of the probe head of the present invention, respectively. Incidentally, for convenience of explanation, FIG. 2 and FIG. 3 show the probe head in seeing through a head substrate, feed-throughs, and electrodes. Moreover, FIG. 4 shows the cross section of the probe head along a two-dot chain line in FIG. 2, seen from an arrow A direction.

In FIG. 2, a probe head 30 is provided with: a head substrate 31; and a beam 32 extending from the head substrate 31. The thickness of the beam 32 is about 1 to 5 micrometers (3.5 micrometers in an example of the manufacturing method described later), for example. On the tip end side of the beam 32, a tip support portion 33 is formed. The tip support portion 33 supports a diamond tip 34 which is sharp. On the base end side of the beam 32, a circuit portion 35 is formed. In the circuit portion 35, a distortion detection circuit 36 is formed. In the beam 32, an insulating wall portion 37 is formed between the tip support portion 33 and the circuit portion 35.

The head substrate 31 supports the base end side of the beam 32. The head substrate 31 is formed of a glass material, such as Pyrex glass, for example, and it has insulation properties. Incidentally, the material of the head substrate 31 may be another material with similar or more excellent characteristics than those of the glass material, in terms of insulation properties, strength, microfabrication capability, stability of properties, durability, or the like.

The tip support portion 33 supports the base portion of the diamond tip 34, on the tip end side of the beam 32. The tip support portion 33 constitutes one portion of the beam 32, on the tip end side of the beam 32. The tip support portion 33 is formed of boron-doped silicon, for example. The tip support portion 33 is low resistant and is substantially an electric conductor. Incidentally, the material of the tip support portion 33 is not limited to boron-doped silicon, but may be any material whose conductivity is increased by adding other impurities to silicon.

The diamond tip 34 is formed of boron-doped diamond, for example. The diamond tip 34 is low resistant and is substantially an electric conductor. The diameter of the tip of the diamond tip 34 is about several nanometers to several tens nanometers, for example. Incidentally, the material of the diamond tip 34 is not limited to boron-doped diamond, but may be any material whose conductivity is increased by adding other impurities to diamond.

The diamond tip 34 is electrically connected to electrodes 45 and 46 through signal routes 41 and 42 and feed-throughs 43 and 44. Each of the signal routes 41 and 42, the feed-throughs 43 and 44, and the electrodes 45 and 46 is a thin film formed of a conductive material, such as metal, and has high conductivity. By this, an electrical signal can be inputted / outputted with respect to the diamond tip 34. For example, if the electrodes 45 and 46 are connected to an exterior read signal processing circuit (refer to FIG. 1), it is possible to obtain a read signal from the diamond tip 34, analyze this signal on the read signal processing circuit, and measure the polarization state of the ferroelectric substance or reproduce the information recorded in the ferroelectric substance. Incidentally, as the signal route which allows the input / output of the electrical signal with respect to the diamond tip 34, the two signal routes 41 and 42 are provided; however, the signal route may be one.

A distortion detection circuit 36 is a circuit for detecting whether or not the tip of the diamond tip 34 contacts the surface of the ferroelectric substance in performing the measurement or the information reading. The distortion detection circuit 36 is a Wheatstone bridge circuit, for example. The distortion detection circuit 36 is provided with: a distortion detecting resistance 47; and another resistance 48, as shown in FIG. 3. The distortion detecting resistance 47 is disposed on the base end side of the beam 32, and constitutes one portion of the beam 32. The resistance 48 is disposed on the lower side of the head substrate 31. The distortion detecting resistance 47 and the resistance 48 are electrically connected to each other through a signal route 49. Moreover, the distortion detection circuit 36 is electrically connected to electrodes 57, 58, and 59 through signal routes 51, 52, and 53 and feed-throughs 54, 55, and 56. Each of the signal routes 49 to 53, the feed-throughs 54 to 56, and the electrodes 57 to 59 is a thin film formed of a conductive material, such as metal. Incidentally, another resistive element or the like required for the Wheatstone bridge circuit is provided for the exterior read signal processing circuit (refer to FIG. 1), connected through the electrodes 57, 58, and 59. It is preferable that a resistance value when there is no distortion in the distortion detecting resistance 47 is equal to the resistance value of the resistance 48. Namely, it is preferable that the sizes (e.g. width, shape, thickness, etc.) of the distortion detecting resistance 47 and the resistance 48 are equal to each other and that the positions that these resistances are connected to the signal route 49 or the like are also equal to each other, in the both resistances.

The insulating wall portion 37 electrically separates the diamond tip 34 and the distortion detection circuit 36. The insulating wall portion 37 is formed of single-crystal silicon, for example. The insulating wall portion 37 is high resistant and is substantially an insulator. As shown in FIG. 4, the insulating wall portion 37 is disposed between the tip support portion 33 and the distortion detection circuit 36 (the distortion detecting resistance 47), and constitutes one portion of the beam 32.

Next, FIG. 5 to FIG. 18 show the manufacturing processes of the probe head 30. Hereinafter, by using those drawings, the manufacturing method of the probe head 30 will be explained.

Firstly, as shown in FIG. 5, a SOI (Silicon On Insulator) substrate 61 is provided. In the SOI substrate 61, an insulating layer 63 is formed on a base layer 62, and a silicon layer 64 is formed on the insulating layer 63, and the surface of the silicon layer 64 is a processing surface 65. The silicon layer 64 is formed of single-crystal silicon, and its thickness is about 3.5 micrometers, for example. The insulating layer 63 is formed of SiO₂, and its thickness is about 0.2 micrometers, for example.

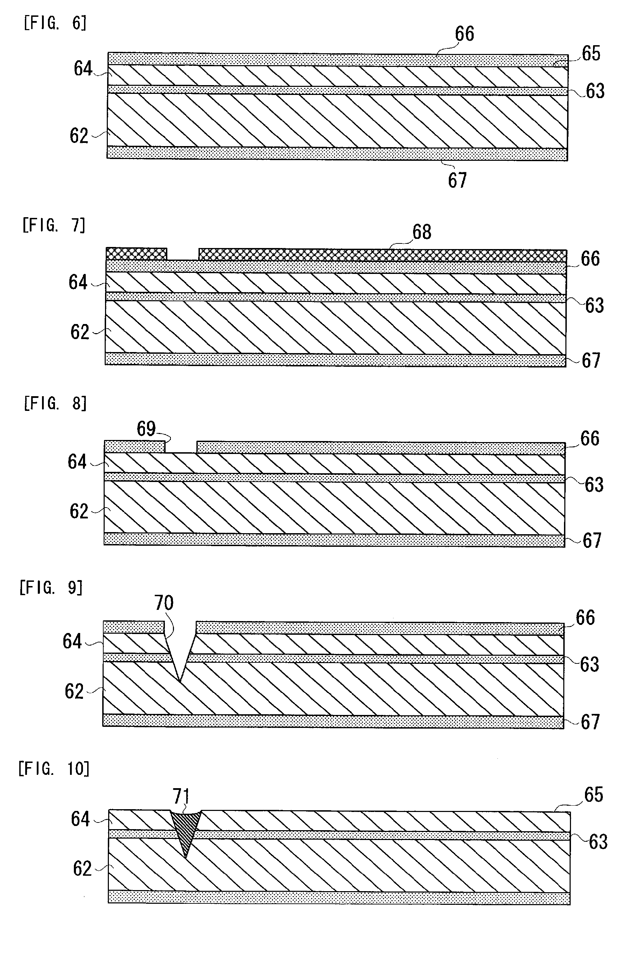

Then, a mold hole 70 for forming the diamond tip is formed in one portion of the SOI substrate 61 toward the bottom side of the base layer 62 from the processing surface 65 side (mold hole forming process: FIG. 6 to FIG. 9). Specifically, as shown in FIG. 6, firstly, cover layers 66 and 67 are formed on the processing surface 65 and the bottom surface of the base layer 62 or the like. The cover layers 66 and 67 are formed of SiO₂, and each layer is thicker than the insulating layer 63 and about 1 micrometer, for example. The formation of the cover layers 66 and 67 is performed by thermal oxidation, for example. Then, as shown in FIG. 7, a resist 68 is formed on the cover layer 66. Then, the cover layer 66 is etched by using the resist 68 as a mask, to thereby form a hole 69 in one portion of the cover layer 66, as shown in FIG. 8. This etching is preferably performed by using FAB (Fast Atom Beam), hydrofluoric acid (HF), or buffered hydrofluoric acid (BHF). After that, the resist 68 is removed. Then, the silicon layer 64 is etched by using the cover layer 66 with the hole 69 formed, as a mask. For this etching, for example, TMAH (Tetramethyl ammonium Hydroxide) is used. Then, the insulating layer 63 is etched by using the cover layer 66 as a mask. This etching is preferably performed by using FAB, HF, or BHF. Incidentally, one portion on the surface side of the cover layer 66 is also removed, but because the cover layer 66 is thicker than the insulating layer 63, the cover layer 66 is not completely removed. Then, the base layer 62 is etched by using the cover layer 66 as a mask. This etching may be performed by using TMAH. By this, as shown in FIG. 9, the mold hole 70 for forming the diamond tip is formed.

Then, in the mold hole 70, diamond is formed with impurities (e.g. boron) mixed therein, to thereby form a diamond tip 71 (tip forming process: FIG. 10). Hereinafter, preferable one example explained as the forming method of the diamond tip 71. Firstly, diamond powders with a particle size on the order of micrometers are mixed into methanol or benzene or the like to prepare a solution, and then, the SOI substrate 61 with the mold hole 70 formed is dipped in the solution. Then, ultrasound is applied by an ultrasound generator (ultrasound washer) to the SOI substrate 61 dipped in the solution, and it is allowed to stand for 4 hours, for example. By this, in the mold hole 70 and on the surface of the cover layer 66 or the like, a flaw which triggers the growth of diamond is formed. Then, the diamond is grown by hot filament chemical vapor deposition (HF-CVD). At this time, H₂ and methane are supplied to a growth furnace, in a molar ratio of 3 percentages of methane. Moreover, at the same time, trimethoxyborane, which is the base material of boron that is a p-type impurity, is supplied by a small amount (about two-digit number lower than methane in the number of moles). Incidentally, the growth of diamond in this process is set to the extent that the diamond does not become in a film shape. Then, the cover layer 66 is etched by using buffer hydrofluoric acid or diluted HF, to thereby remove one portion on the surface side of the cover layer 66. By this, the diamond particles grown on the cover layer 66 are also removed together with one portion of the cover layer 66. Then, the boron-doped diamond is grown in the mold hole 50 by HF-CVD, and as shown in FIG. 10, the diamond tip 71 is formed. Then, the cover layer 66 is removed by etching.

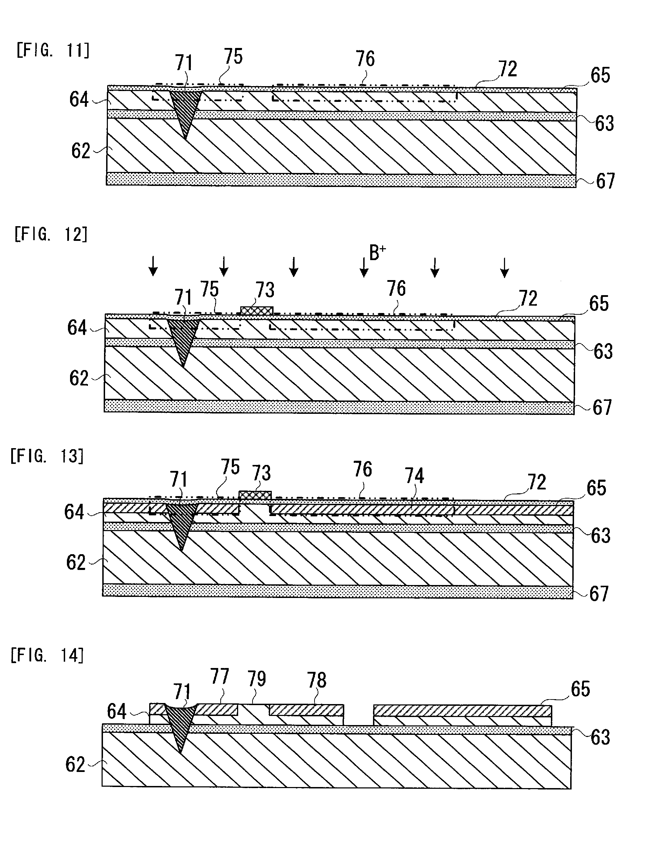

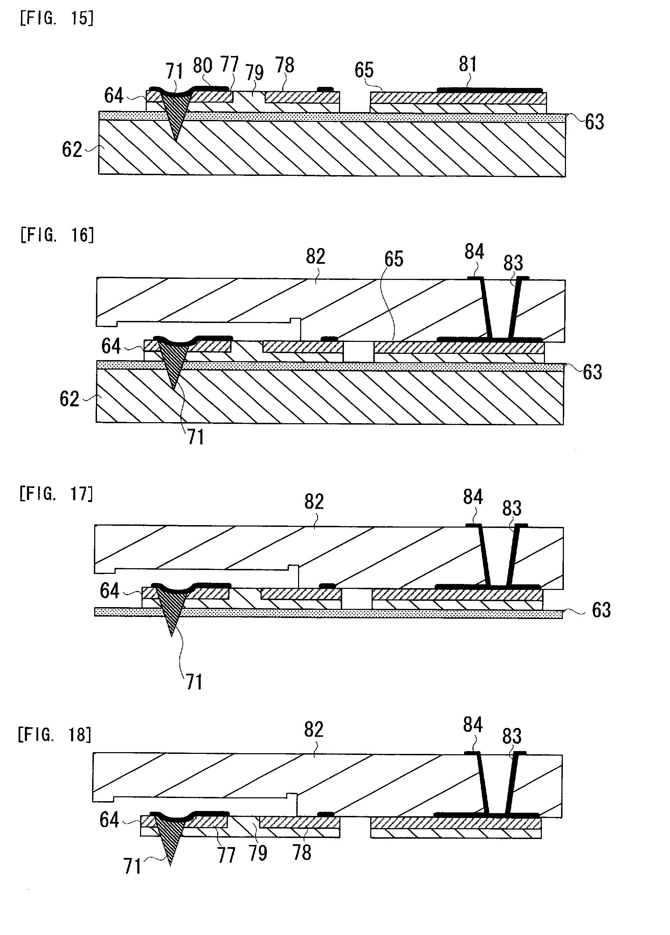

Then, in the silicon layer 64, impurities (e.g. boron) are implanted into a tip support area 75, which is the surrounding area of the mold hole 70, and a circuit formation area 76, which is disposed away from the mold hole 70, to thereby form a low resistant layer in the tip support area 75 and the circuit formation area 76 or the like. Then, by this, a tip support portion 77 and a distortion detection circuit 78 or the like are formed (circuit forming process: FIG. 11 to FIG. 14). Specifically, as shown in FIG. 11, a SiO₂ cover layer 72 is formed again on the processing surface 65. The cover layer 72 functions to prevent the surface of the silicon layer 64 from being damaged by ion implantation and heat processing performed in the subsequent processes. Then, a photoresist 73 is formed on one portion of the cover layer 72. Then, as shown in FIG. 12, boron is implanted to the surface of the silicon layer 64 by using an ion implanting apparatus, to thereby form a boron-doped layer 74 (low resistant layer) in an area with a depth of about 0.2 to 0.8 micrometers from the surface of the silicon layer 64, as shown in FIG. 13. At this time, the implanted ions are shielded by the photoresist 73, so that the boron-doped layer 74 is formed in the silicon layer 64 only in a portion that is not shielded by the photoresist 73. Thus, when the photoresist 73 is formed, it is considered to perform the ion implantation at least in the tip support area 75 and the circuit formation area 76 and to form (leave) a portion in which the ion implantation is not performed (high resistant layer) between the tip support area 75 and the circuit formation area 76 while the photoresist 73 is patterned. Then, the silicon layer 64 is heated, to cause a p-type in the boron-doped layer 74. Then, the cover layers 67 and 72 are removed by etching. Then, the silicon layer 64 is etched so that the tip support portion 77 (33) and the distortion detection circuit 78 (36) or the like have the shape shown in FIG. 2. More specifically, a photoresist with the tip support portion 77 and the distortion detection circuit 78 or the like modeled is formed on the silicon layer 64, and then it is etched by ICP-RIE (Inductively Coupled Plasma-Reactive Ion Etching), for example. By this, as shown in FIG. 15, the tip support portion 77 and the distortion detection circuit 78 are formed in the silicon layer 64. Then, the high resistant layer remaining between the tip support portion 77 and the distortion detection circuit 78 becomes an insulating wall portion 79.

Then, a pattern made of a conductive material (e.g. Cr/Pt) is formed on the processing surface 65 of the silicon layer 64, to thereby form a signal route 80 which allows the input / output of an electrical signal with respect to the diamond tip 71 and a signal route 81 which allows the input / output of an electrical signal with respect to the distortion detection circuit 78 or the like (signal route forming process: FIG. 15).

Then, a head substrate material 82 (e.g. Pyrex glass) with a hole for feed-through or the like formed is connected to the processing surface 65 (connecting process: FIG. 16). Then, aluminum or the like is spattered, to thereby form a feed-through 83 and an electrode 84.

Then, the base layer 62 is etched from the bottom side, to thereby remove the base layer 62 and the insulating layer 63 (removing process: FIG. 17 and FIG. 18). Specifically, as shown in FIG. 17, the base layer 62 is etched by ICP-RIE, for example, to remove the base layer 62. Then, the insulating layer 63 is etched by using buffer hydrofluoric acid (BHF), to remove the insulating layer 63. Then, the whole is dried by Supercritical drying.

Lastly, one portion of the head substrate material 82 is disconnected, to complete the probe head 30 (refer to FIG. 4).

As described above, in the manufacturing method of the probe head 30, the SOI substrate 61 is used as the material of the tip support portion 33 (77), the insulating wall portion 37 (79), and the distortion detection circuit 36 (78), which constitute the beam 32. Then, in all the manufacturing processes shown in FIG. 6 to FIG. 18, the tip support portion 33 (77), the insulating wall portion 37 (79), and the distortion detection circuit 36 (78) are formed while maintaining the total thickness of the silicon layer 64 of the SOI substrate 61. Moreover, as shown in FIG. 17 and FIG. 18, the base layer 62 and the insulating layer 63 of the SOI substrate 61 are removed, to thereby eventually leave only the silicon layer 64 in which the tip support portion 33 (77), the insulating wall portion 37 (79), and the distortion detection circuit 36 (78) are formed. According to such a manufacturing method, it is possible to form the beam 32 with a uniform thickness. By this, it is possible to uniform the frequency of the vibration of the beam 32 among individual beams. Therefore, at the designing stage of the probe head 30 or a SNDM analyzing apparatus, a SNDM information recording / reproducing apparatus, or the like, it is possible to consider the frequency of the vibration of the beam 32, to thereby take measures to prevent scanning failure, false detection, information reading failure or the like, caused by the vibration of the beam. For example, by restricting the upper limit of the scanning speed in view of the frequency of the vibration of the beam 32, it is possible to inhibit the vibration of the beam 32, caused by the unevenness of the surface of the ferroelectric substance, and prevent the scanning failure, false detection, information reading failure or the like.

Specifically, in the mass production of many probe heads 30 by using a SOI wafer, it is possible to ensure the uniformity in thickness of the beam 32 in all the mass-produced probe heads 30, as long as the thickness of the silicon layer 64 of the SOI wafer is uniform. Therefore, it is possible to eliminate scattering in the vibration of the beam 32, to thereby prevent the scanning failure, false detection, information reading failure or the like. This is also useful even in the case where the multi-probe type probe head is manufactured.

Moreover, in the above-mentioned manufacturing method, the beam 32 is formed by removing the base layer 62 and the insulating layer 63 of the SOI substrate 61 to thereby leave the silicon layer 64 with a uniform thickness from the beginning of the manufacturing. According to the manufacturing method, even if the areas of the upper surface and the lower surface (surfaces extending in a direction perpendicular to the vibration direction of the beam 32, i.e., in a direction parallel to the surface of the ferroelectric substance) are increased by incorporating the distortion detection circuit 36 (the distortion detecting resistance 47) in the beam 32, it is possible to ensure the uniformity in thickness of the beam 32. Therefore, even if the distortion detection circuit 36 is incorporated in the beam 32, it is possible to ensure uniformity in frequency of the vibration of the beam 32, to thereby prevent the scanning failure, false detection, information reading failure or the like.

Incidentally, the above-mentioned embodiment adopts the case where the present invention is applied to the probe head used for the SNDM or the SNDM information recording, as an example. The present invention, however, is not limited to this, and can be applied to the probe head used for another type of SPM or information recording, such as STM, AFM, and thermomechanical information recording.

Moreover, if the above-mentioned manufacturing method is applied to the probe head which does not necessarily have conductivity, as in AFM, for example, it is unnecessary to make the tip support portion 13 (33) and the diamond tip 14 (34) low resistant, by doping boron or the like, in the above-mentioned embodiment. Namely, it is unnecessary to mix impurities, such as boron, in the diamond growing process in FIG. 10 and in the process of forming the tip support area 75 in FIG. 11 to FIG. 14. Even in the case of the probe head in which the diamond tip 14 (34) does not have conductivity, as described above, it is possible to form the beam 32 with a uniform thickness, to thereby receive the above-mentioned various benefits.

Moreover, in the present invention, various changes may be made, if desired, without departing from the essence or spirit of the invention which can be read from the claims and the entire specification. A probe head manufacturing method which involves such changes is also intended to be within the technical scope of the present invention.

### Industrial Applicability

The probe head manufacturing method of the present invention can be applied to a scanning probe microscope apparatus or a scanning probe information recording / reproducing apparatus or the like..

## Claims

1. A manufacturing method of a probe head comprising a diamond tip, said manufacturing method comprising:
a mold hole forming process of forming a mold hole for forming the diamond tip, toward a bottom surface side of a base layer from a processing surface, in one portion of a SOI (Silicon On Insulator) substrate in which an insulating layer is formed on the base layer, a silicon layer is formed on the insulating layer, and a surface of the silicon layer is the processing surface;
a tip forming process of growing diamond in the mold hole, with impurities mixed therein, to thereby form the diamond tip;
a signal route forming process of forming a pattern made of a conductive material on the processing surface, to thereby form a signal route which allows input / output of an electrical signal with respect to the diamond tip;
a connecting process of connecting a head substrate to the processing surface; and
a removing process of etching the base layer from the bottom surface side, to thereby remove the base layer and the insulating layer.

2. A manufacturing method of a probe head comprising a diamond tip and a distortion detection circuit, said manufacturing method comprising:
a mold hole forming process of forming a mold hole for forming the diamond tip, toward a bottom surface side of a base layer from a processing surface, in one portion of a SOI (Silicon On Insulator) substrate in which an insulating layer is formed on the base layer, a silicon layer is formed on the insulating layer, and a surface of the silicon layer is the processing surface;
a tip forming process of growing diamond in the mold hole, with impurities mixed therein, to thereby form the diamond tip;
a circuit forming process of implanting impurities into a circuit formation area, which is disposed away from the mold hole, in the silicon layer, to thereby form a low resistant layer in the circuit formation area, to thereby form the distortion detection circuit;
a signal route forming process of forming a pattern made of a conductive material on the processing surface, to thereby form a signal route which allows input / output of an electrical signal with respect to the diamond tip and a signal route which allows input / output of another electrical signal with respect to the distortion detection circuit;
a connecting process of connecting a head substrate to the processing surface; and
a removing process of etching the base layer from the bottom surface side, to thereby remove the base layer and the insulating layer.

3. A manufacturing method of a probe head comprising a diamond tip, said manufacturing method comprising:
a mold hole forming process of forming a mold hole for forming the diamond tip, toward a bottom surface side of a base layer from a processing surface, in one portion of a SOI (Silicon On Insulator) substrate in which an insulating layer is formed on the base layer, a silicon layer is formed on the insulating layer, and a surface of the silicon layer is the processing surface;
a tip forming process of growing diamond in the mold hole, to thereby form the diamond tip;
a signal route forming process of forming a signal route of a signal which is inputted to / outputted from the diamond tip, on the processing surface;
a connecting process of connecting a head substrate to the processing surface; and
a removing process of etching the base layer from the bottom surface side, to thereby remove the base layer and the insulating layer.

4. A manufacturing method of a probe head comprising a diamond tip and a distortion detection circuit, said manufacturing method comprising:
a mold hole forming process of forming a mold hole for forming the diamond tip, toward a bottom surface side of a base layer from a processing surface, in one portion of a SOI (Silicon On Insulator) substrate in which an insulating layer is formed on the base layer, a silicon layer is formed on the insulating layer, and a surface of the silicon layer is the processing surface;
a tip forming process of growing diamond in the mold hole, to thereby form the diamond tip;
a circuit forming process of implanting impurities into a circuit formation area, which is disposed away from the mold hole, in the silicon layer, to thereby form a low resistant layer in the circuit formation area, to thereby form the distortion detection circuit;
a signal route forming process of forming a signal route of a signal which is inputted to / outputted from the diamond tip and a signal route which allows input / output of another electrical signal with respect to the distortion detection circuit;
a connecting process of connecting a head substrate to the processing surface; and
a removing process of etching the base layer from the bottom surface side, to thereby remove the base layer and the insulating layer.
